# EUROPEAN PATENT APPLICATION

(11) **EP 1 102 424 A2**
(43) Date of publication of application: **23.05.2001**
(21) Application number: 00124397.1
(22) Date of filing: 21.11.2000
(51) Int. Cl.: H04B 10/18

(54) **An optical signal processor employing an optical threshold device for reducing wideband optical noise and a method therefor**

(30) Priority: 22.11.1999 US 444976
(71) Applicant: TRW Inc., Redondo Beach, California 90278 (US)
(72) Inventor: Ferguson, Bruce A., Redondo Beach, CA 90278 (US); Carillo, Juan C. Jr., Torrance, CA 90504 (US); Fields, Richard A., Redondo Beach, CA 90278 (US); Leight, James E., Los Angeles, CA 90066 (US); Rollins, David L., Hawthorne, CA 90250 (US)
(74) Representative: Schmidt, Steffen J., Dipl.-Ing.

(57) **Abstract**

An optical signal processor for use with an optical input signal dispersed over a spectrum of frequencies containing wideband optical noise is disclosed. The processor comprises a first prism for translating the spectrum of optical input signals into the spatial domain, an optical threshold device for transmitting optical signals whose combined intensities exceed a threshold level which is greater than the level of the noise, and a second prism for translating the optical signals from the spatial domain to the frequency domain, such that the optical output signals correspond to the optical input signals with the noise below the threshold level removed. A method for removing wideband optical noise is also disclosed. Alternatively, optical signal translators in the form of an arrayed waveguide or a grating may be employed.

## Description

### BACKGROUND OF THE INVENTION

### 1. Field of the Invention

This invention relates generally to an optical signal processor and, more particularly, to an optical signal processor that employs an optical thresholding device for reducing wideband optical noise and a method therefor.

### 2. Discussion of the Related Art

Advances in signal processing technology, including the need for greater processing speeds, increased channel bandwidths and improved transmission reliability, has resulted in a steadily growing focus on the optical domain and the vast potential that lies therein with respect to these parameters. However, optical technology, as compared to electrical and radio frequency based technology, lacks the necessary technical sophistication in many areas. Particularly, the desire for high-speed, large-bandwidth processing devices employing optics has been hampered by the lack of many basic optical signal processors and technologies readily available in the RF domain.

In addition to the large bandwidth capability, optical communications and signal processing have other obvious advantages over electronics in that they can provide a spatial processing capability.

Optical signal processing, however, is currently limited in performance due to optical noise. Specifically, when dealing with an optical communication link, noise from optical amplifiers may set the noise floor for the link and subsequent signal processing. This optical amplifier noise is also referred to as amplified spontaneous emission noise and designated as "ASE" noise. The ASE noise generated in optical amplifiers is a fundamental phenomenon which cannot be bypassed due to the conventional operation of the amplifier. However, a number of narrowband ASE filtering techniques have been devised to reduce the impact of ASE on a narrowband optical link.

Particular problems with ASE arise in two situations: wideband optical signals, and multi-wavelength or wavelength-division multiplexed (WDM) signals. For wideband optical links, the sidebands of the optical carrier may extend over 100 GHz from the optical carrier frequency. In WDM systems, the ranges of signal wavelengths may cover several nanometers. These wideband optical signals require an optical signal processing system with improved noise rejection capabilities in order to reduce the large ASE noise power occupying the wideband optical channel..

An example of an optical apparatus that uses specific features for reducing noise is found in United States Patent No. 5,337,180 to Woods, et al., entitled "Optical Signal Dependent Noise Reduction by Variable Spatial Thresholding of the Fourier Transform". Such apparatus utilizes a spatial-technique for reducing signal dependent spatial intensity noise, which is a multiplicative-type of noise. As such, should the signal be increased, then the noise likewise increases. This technique focuses on reduction of optically narrowband intensity noise in a spatial intensity pattern rather than noise contained in an optical communication signal, which is optically wideband.

Other optical systems, such as those described in United States Patent No. 4,715,689, by O'Meara, et al., entitled "Apparatus and Method for Spatial Intensity Threshold Detection" and in Klein, et al., entitled "Erase Beam Apparatus and Method for Spatial Intensity Threshold Detection" use optical threshold devices, but do not utilize a saturable absorber for reducing wideband noise. These devices detect whether portions of a spatial intensity pattern are above or below threshold. In this detection process, the pattern beam is destroyed.

What is needed is an efficient optical signal processor and a method for reducing wideband noise from signals dispersed over a spectrum of frequencies. It is therefore an object of the present invention to provide such an optical signal processor.

### SUMMARY OF THE INVENTION

In accordance with the teachings to the present invention an optical signal processor is disclosed that employs an optical thresholding device positioned in the propagation path of an optical input beam and that reduces wideband noise. The optical signal processor includes a first prism or the like for translating the temporal frequency spectrum of optical input signals into the spatial domain. An optical thresholding device serves to transmit the optical beams or signals when their intensities exceed a predetermined threshold level which is designed into the device and which level is established to be greater than that of the wideband noise. Signals and noise having intensities below the threshold level are absorbed and are not transmitted through the device. A second prism translates the optical signals from the spatial domain to the frequency domain to produce optical output signals with all noise below the threshold level removed. The prisms provide substantially noiseless translations.

In one particular embodiment of the optical signal processor, the optical thresholder is a saturable absorber. In alternate embodiments, the translators are arrayed waveguides or gratings. Typically the optical signal processor is configured following an optical amplifier that inherently introduces noise into an optical communication system. The processor can be used in the optical transmitter and/or the optical receiver.

Additional objects, advantages, and features of the present invention will become apparent from the following description and appended claims, taken in conjunction with the accompanying drawings.

### BRIEF DESCRIPTION OF THE DRAWINGS

FIG. 1 is a schematic plan view of an optical signal processor employing an optical threshold device, according to an embodiment of the present invention.

FIG. 2a-e are graphs illustrating the optical power spectrum of the optical signals processed by the several elements of the optical signal processor of FIG. 1.

FIG. 3 is a graph of the transmission versus normalized input intensity for the optical threshold device used in the processor illustrated in FIG 1.

FIG. 4 illustrates the incorporation of the optical signal processor of the present invention into the transmitter and receiver portions of an optical communication system.

### DETAILED DESCRIPTION OF THE PREFERRED EMBODIMENTS

The following discussion of the preferred embodiment directed to an optical signal processor employing an optical thresholder is merely exemplary in nature and is in no way intended to limit the invention or its applications or uses.

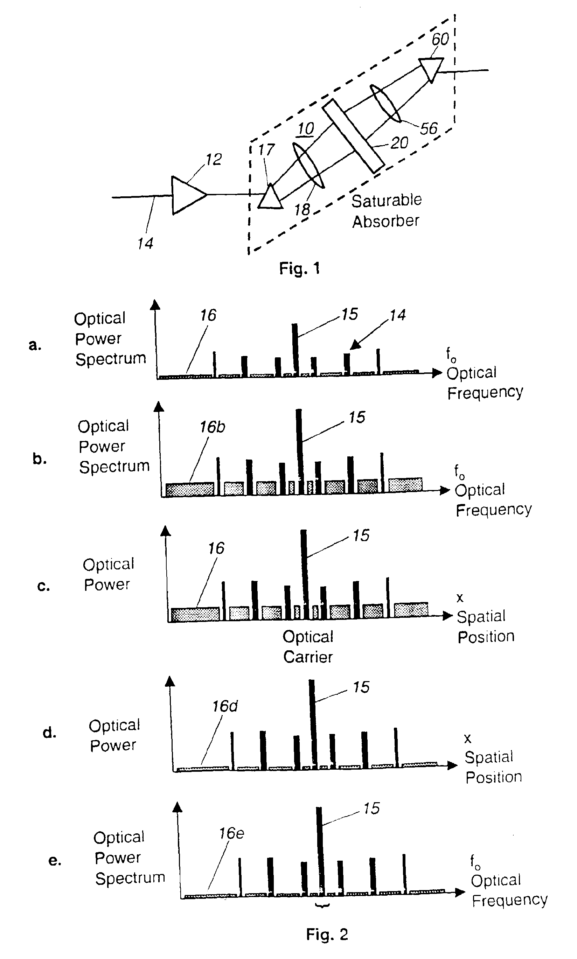

FIG. 1 is a schematic block diagram of an optical signal processor 10, according to an embodiment of the present invention.

In an optical communication system, the signal processor 10 is inserted after an optical amplifier 12. The amplifier 12 amplifies an optical signal 14 applied to its input, as well as any wideband noise associated with the signal 14. Also with reference to FIG. 2a, the signal 14 is broadband and represented by an optical carrier tone 15 or frequency with sidebands. It can be a single wavelength or a multiple wavelength signal. Alternatively, the optical signal could be represented by a single variable-frequency tone, as would be the case for an analog optical FM or PM transmission, or a signal, either analog or digital, with any modulation. Also shown is a noise floor 16 accompanying the optical signal. In FIG. 2a the horizontal axis is the optical frequency. The vertical axis shows the optical power spectrum illustrating the power density or intensity at a given frequency. The entire band shown in the plot represents the transmission bandwidth of the signal 14.

As is well known, the amplifier 12 creates significant wideband amplified spontaneous emission ("ASE") noise as shown by the increased level of the noise floor 16b in FIG. 2b. This degrades the optical signal-to-noise ratio (SNR) or transmission carrier-to-noise ratio (CNR). A translator 17 serves to translate the spectrum of frequencies applied at its input side into the spatial domain as shown in FIG. 2c. The translator 17 creates a noiseless transformation and is functionally a simple prism, although it could be an arrayed waveguide ("AWG") or a grating. The translator 17, for example, translates or maps the optical frequency into spatial position, such that several independent light beams are emitted from the prism if the input is a WDM signal. In FIG. 2c, the horizontal axis has changed to show the spatial position x of the translated light beams. There is a direct relationship between optical frequency and spatial position due to the action of the prism 17. As illustrated in FIG. 2c, there is a spatially varying pattern of intensity which represents the optical spectrum, both signal and noise 16. No noise is added by the prism 17 in this example. A lens 18 may be used to expand, or better separate, the beams of light passing therethrough.

A saturable absorber 20, acting as an optical thresholding device (OTD), is positioned along the propagation path of the translated optical beams. The saturable absorber 20 is a known optical device that is generally opaque or lossy in a normal state for the low intensity ASE noise, but when the optical beam signal having an intensity above a threshold level of the absorber impinges it, the absorber will saturate and become transparent or "bleached". Saturable absorbers of this type that exhibit these properties have been well known in the art for their use in mode-lock lasers. The key is that the optical SNR, which is also the carrier-to-noise ratio has been improved. This provides great benefit in demodulation of the optical signals. The output of the saturable absorber is shown in FIG. 2d. Here, the optical noise floor 16d of the transmission bandwidth has been reduced by the action of the absorber 20, and thus as previously stated, the optical SNR has been improved.

The absorber 20 has a lateral spatial dimension that is wider than the translated spectrum of the optical signal and functionally transmits or passes the optical signals or beams that exceed the predetermined threshold level designed into the absorber 20. If the noise or any of the beams do not have a large enough intensity to saturate absorber 20, then it is absorbed by the absorber 20 and does not pass through. Saturable absorbers are used by way of a non-limiting example, in that any optical thresholding device having the properties described herein can be used as would be appreciated by those skilled in the art.

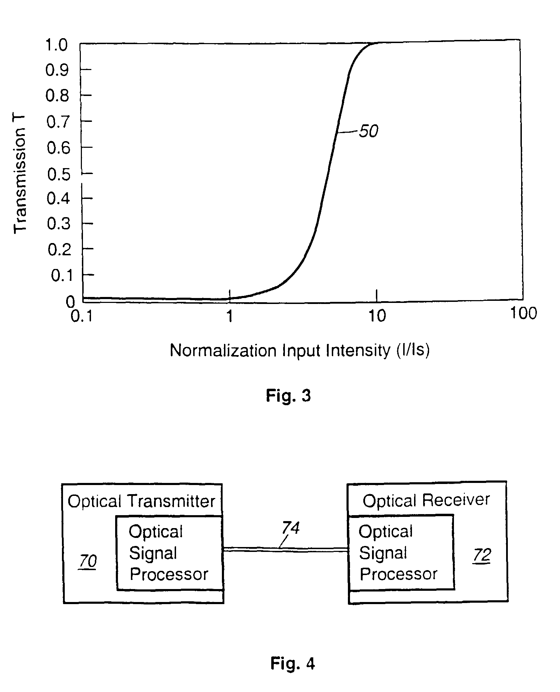

Also, with reference to FIG 3, a characteristic graph 50 shows the transmission T of the saturable absorber 20 plotted as a function of the intensity of the control beam normalized to the saturation intensity of the absorber. The intensity of the desired signal components should be in the saturated regime to the right in Figure 3. The noise PSD level should fall in the lossy regime to the left in the figure. This implies that a certain input SNR is required for this system to perform optimally.

A lens 56 serves to collimate the beam of light passed through the absorber 20. A translator 60, similar to the translator 17 serves to translate the optical signal from the spatial domain to the frequency domain. The translator 60 can be a prism, an arrayed waveguide, a grating or any other functionally equivalent translating element. Thus, this effectively configures the spatial intensity distribution to an optical spectrum in a single beam. The output power spectrum of the optical signal is illustrated in FIG. 2e. It should be noted that the signal content remains at its amplified level (less a small loss due to threshold transmisison), but the noise, shown by the numeral 16e, has been reduced in regions of the spectrum that do not contain signals. Over the wide optical transmission bandwidth, this noise level reduction results in reduced noise power and thus increased CNR.

In operation, the optical input signal 14 and its inherent noise is amplified by the optical amplifier 12 which also creates and amplifies ASE noise. The resulting signal as shown in FIG. 2b is applied to the input of the prism 17 in the optical signal processor 10. The prism 17 converts the optical spectrum into one having a spatially varying pattern of intensity as shown in FIG. 2c. The saturable absorber 20 having its threshold pre-established passes or transmits intensities of the translated optical signal that exceed the threshold, and absorbs intensities below this value. Its output is shown in FIG. 2d and has a spatial intensity pattern with a lower noise floor 16d. A second prism or prism-functioning device 60 converts the spatial intensity pattern back into the optical spectrum of FIG. 2e, which exits the optical signal processor 10.

Because the signal may be relatively wideband optically, any wavelength dependence of the action of the OTD should be made negligible. Also, the OTD is required to be fast operating, on the order of the inverse of the highest RF frequency of the optical signal. Slower operation may further reduce the signal amplitudes and thus degrade the optical SNR improvement.

FIG. 4 illustrates that the optical signal processor 10 in accordance with the present invention can be utilized in either the transmitter 70 and/or receiver 72 of an optical communication system and used with optical fiber telecommunication, free space links 74 between satellites, or land-based free-space systems.

It should be recognized that the present invention can be used in wavelength division multiplexing or analog modulated wideband optical communication systems, as well as in narrow band applications where unwanted optical energy must be removed.

The foregoing discussion discloses and describes merely exemplary embodiments of the present invention. One skilled in the art will readily recognize from such discussion, and from the accompanying drawings and claims that various, changes, modifications and variations can be made therein without departing from the spirit and scope of the invention as defined in the following claims.

## Claims

1. An optical signal processor for use with an optical input signal dispersed over a spectrum of frequencies containing noise comprising:
first means for translating the spectrum of optical input signals into the spatial domain;
optical threshold means for transmitting optical signals whose intensities exceed a threshold level, said threshold level being greater than the level of said noise; and
second means for translating the optical signals from the spatial domain to the frequency domain, such that the optical output signals correspond to the optical input signals with the noise below the threshold level removed.

2. The optical signal processor according to claim 1 wherein said first means comprises a prism.

3. The optical signal processor according to claim 1 wherein said first means comprises an arrayed waveguide.

4. The optical signal processor according to claim 1 wherein said first means comprises a grating.

5. The optical signal processor according to claim 1 wherein the first means and said second means provide a substantially noiseless translation.

6. The optical signal processor according to claim 1 wherein said optical input signals are wavelength division multiplexed optical signals.

7. The optical signal processor according to claim 1 and further comprising an optical amplifier that provides the optical input signals.

8. A method of removing wideband noise from an optical input signal dispersed over a spectrum of frequencies comprising:
translating the spectrum of optical input signals into the spatial domain;
transmitting the optical signals whose intensities exceed a threshold level, said threshold level being greater than the level of said noise; and
translating the optical signals from the spatial domain to the frequency domain, such that the optical output signals correspond to the optical input signals with the noise below the threshold level removed.
